# EUROPEAN PATENT SPECIFICATION

(11) **EP 3 479 943 B1**
(45) Date of publication and mention of the grant of the patent: **05.01.2022**
(21) Application number: 18204130.1
(22) Date of filing: 02.11.2018
(51) Int. Cl.: B23D 47/10

(54) **CUTTING-OFF MACHINE TO CUT SECTION BARS, IN PARTICULAR MADE OF ALUMINIUM, LIGHT ALLOYS, PVC OR THE LIKE**
TRENNMASCHINE ZUM TRENNEN VON PROFILSTANGEN, INSBESONDERE AUS ALUMINIUM, LEICHTMETALL, PVC ODER DERGLEICHEN
MACHINE DE DÉCOUPE DE BARRES DE SECTION, FABRIQUÉES EN PARTICULIER EN ALUMINIUM, ALLIAGES LÉGERS, PVC OU ANALOGUES

(30) Priority: 02.11.2017 IT 201700124866
(43) Date of publication of application: 08.05.2019
(73) Proprietor: F.O.M. Industrie S.r.l., 47841 Cattolica (IT)
(72) Inventor: LATTANZI, Lorenzo, 61121 PESARO (PU) (IT)
(74) Representative: Manconi, Stefano

(56) References cited:
- EP-A1- 3 078 439
- WO-A1-2017/098979
- DE-U1- 8 631 960

## Description

### CROSS-REFERENCE TO RELATED APPLICATIONS

This patent application claims priority from Italian patent application no. 102017000124866 filed on 02/11/2017.

### TECHNICAL FIELD

The present invention relates to a cutting-off machine to cut section bars, in particular made of aluminium, light alloys, PVC or the like.

### BACKGROUND ART

In the section bar cutting field it is known to provide a cutting-off machine of the type comprising a base defining a horizontal resting surface for a section bar and a cutting unit provided with a support frame, which has a vertical resting surface for the section bar and is mounted to rotate, relative to the base, about a fulcrum axis perpendicular to the vertical resting surface.

The cutting unit further comprises a circular cutting blade, mounted on the support frame to rotate about a rotation axis transverse to the fulcrum axis, and an operating device to move the cutting blade relative to the support frame and through the aforementioned horizontal and vertical resting surfaces.

Generally, the operating device comprises at least one advancing slide, slidably coupled to the support frame to move the cutting blade relative to the support frame and under the thrust of an electric motor between a working position, in which the cutting blade protrudes above the horizontal resting surface to cut the section bar, and a rest position, in which the cutting blade is arranged outside the horizontal resting surface.

WO2017098979 discloses a cutting-off machine as per the preamble of appended claim 1.

The known cutting-off machines of the type described above have some drawbacks, mainly deriving from the fact that, in the event of a power supply failure of the electric motor when the cutting blade is in its working position, the cutting blade protrudes above the horizontal resting surface and this involves a risk situation for the personnel in charge.

### DISCLOSURE OF INVENTION

The object of the present invention is to provide a cutting-off machine to cut section bars, in particular made of aluminium, light alloys, PVC or the like, which is free from the drawbacks described above and is simple and inexpensive to implement.

According to the present invention, it is provided a cutting-off machine to cut section bars, in particular made of aluminium, light alloys, PVC or the like, as claimed in appended claim 1. Preferred embodiments are disclosed in the dependent claims.

### BRIEF DESCRIPTION OF THE DRAWINGS

The present invention will now be described with reference to the accompanying drawings showing an example of a nonlimiting embodiment, in which:
Figure 1 is a schematic perspective view, with parts removed for clarity's sake, of a preferred embodiment of the cutting-off machine of the present invention;
Figure 2 is a schematic side view, with parts removed for clarity's sake, of the cutting-off machine of Figure 1;
Figure 3 is a schematic view of the operating principle of a detail of the cutting-off machine of Figures 1 and 2;
Figure 4 is a schematic perspective view, with parts removed for clarity's sake, of a variant of the cutting-off machine of Figures 1 and 2; and
Figure 5 is a schematic side view, with parts removed for clarity's sake, of the variant of Figure 4.

### BEST MODE FOR CARRYING OUT THE INVENTION

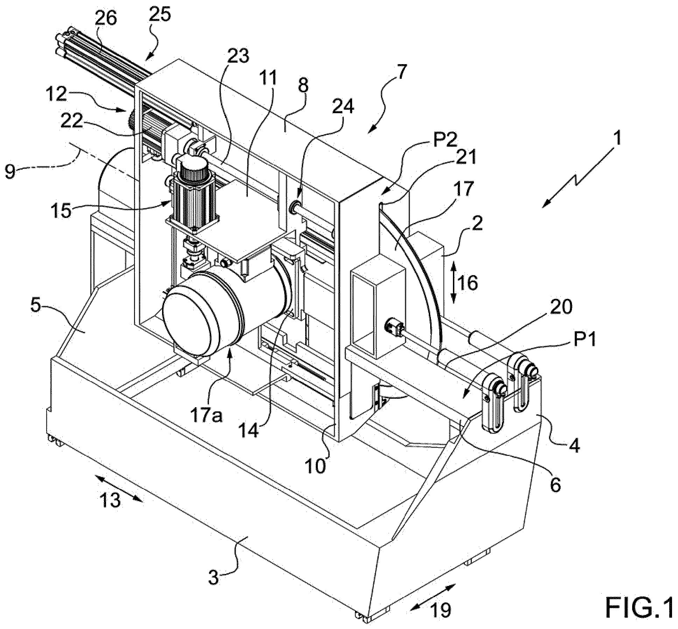

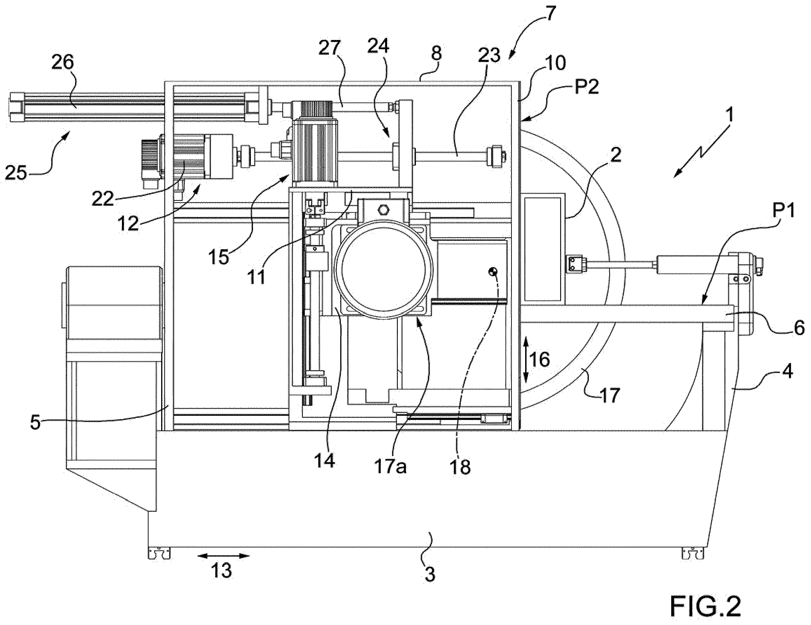

With reference to Figures 1 and 2, 1 indicates as a whole a cutting-off machine to cut section bars 2, in particular made of aluminium, light alloys, PVC or the like.

The cutting-off machine 1 comprises a base 3, which is substantially U-shaped and is provided with two vertical uprights 4, 5 that are substantially parallel to each other.

The base 3 comprises a support table 6, which protrudes from the upright 4 towards the upright 5 and defines a substantially horizontal resting surface P1 for at least one section bar 2.

The cutting-off machine 1 further comprises a cutting unit 7, which extends between the upright 5 and the table 6, and is provided with a support frame 8 having the shape of a substantially square box-like body.

The frame 8 is rotatably coupled to the upright 5 to rotate relative to the base 3 about a rotation axis 9 substantially parallel to the plane P1, and has a lateral plate 10 defining a substantially vertical resting surface P2 for at least one section bar 2.

The unit 7 comprises a first slide 11, which is slidably coupled to the frame 8 to perform, relative to the frame 8 and under the thrust of an operating device 12, rectilinear movements in a horizontal direction 13 parallel to the plane P1 and perpendicular to the plane P2.

Moreover, the unit 7 has a second slide 14, which is slidably coupled to the slide 11 to perform, relative to the slide 11 and under the thrust of an operating device 15, rectilinear movements in a direction 16 transverse to the direction 13 and whose orientation depends on the position of the frame 8 about the axis 9.

The slide 14 supports a circular cutting blade 17 mounted to rotate, under the thrust of a known type of operating device 17a, about a rotation axis 18 parallel to a direction 19 orthogonal to the directions 13 and 16 and whose orientation depends on the position of the frame 8 about the axis 9.

By combining the movements of the slide 11 in the direction 13 with the movements of the slide 14 in the direction 16, the blade 17 moves through a slit 20 formed in the table 6 and a slit 21 formed in the plate 10 between a working position (Figures 1 and 2), in which the blade 17 protrudes above the plane P1 to cut the section bar 2, and a rest position (not shown), wherein the blade 17 disengages the slits 20 and 21 and is arranged outside the plane P1.

In other words, at the end of the cutting operations, the blade 17 is arranged in its rest position inside the frame 8 in order to avoid a risk situation for the personnel in charge.

The operating device 12 comprises an electric motor 22, which is fixed to the frame 8 and is provided with an output shaft 23, which extends in the direction 13, and is coupled to the slide 11 by means of a screw-nut coupling 24.

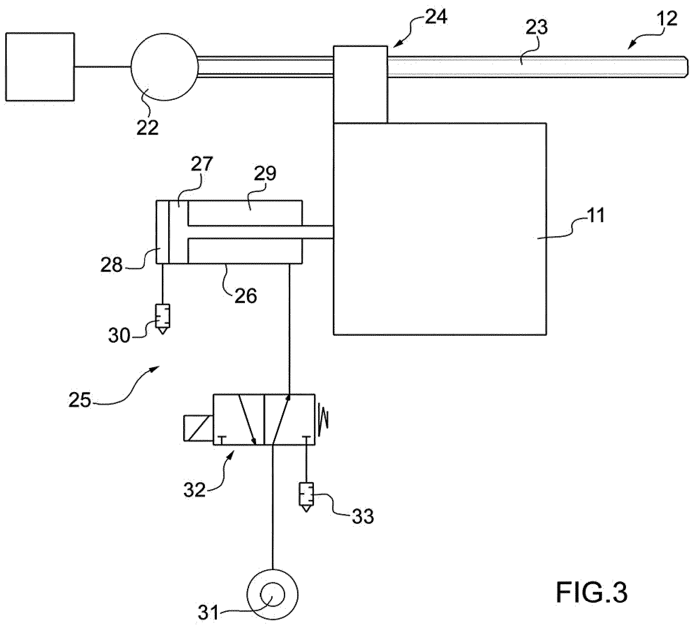

In the event of a power supply failure of the electric motor 22, the blade 17 is moved from its working position to its rest position by an operating device 25 comprising an actuating cylinder 26, in this case a pneumatic actuating cylinder, mounted parallel to the direction 13. As shown in Figure 3, the cylinder 26 is fixed to the frame 8 and has a piston 27, which is movable inside the cylinder 26 in the direction 13 and defines inside the cylinder 26 two variable-volume chambers 28, 29.

The chamber 28 is connected to a discharge line 30, while the chamber 29 is adapted to be connected to a pneumatic pressurized gas-feeding device 31 by interposing a valve 32.

The valve 32 is normally arranged in a first working position (not shown) wherein the chamber 29 is connected to a discharge line 33 to allow the piston 27 to freely move along the cylinder 26 under the thrust of the slide 11. Moreover, the valve 32 is movable in a second working position (Figure 3), in which the chamber 29 is connected to the device 31 to move the slide 11 and, therefore, the blade 17 from their working position to their rest position in the event of a power supply failure of the electric motor 22.

With reference to the foregoing, it must be specified that the shaft 23 has a thread whose pitch allows the nut screw to move along the shaft 23 under the thrust of the cylinder 26.

According to some variants not shown:
the screw-nut coupling 24 is eliminated and replaced, for example, with a pinion-rack coupling or by a belt transmission configured to move under the thrust of the device 25; and
the actuating cylinder 26 is removed and replaced, for example, by a hydraulic actuating cylinder or by a mechanical or gas spring.

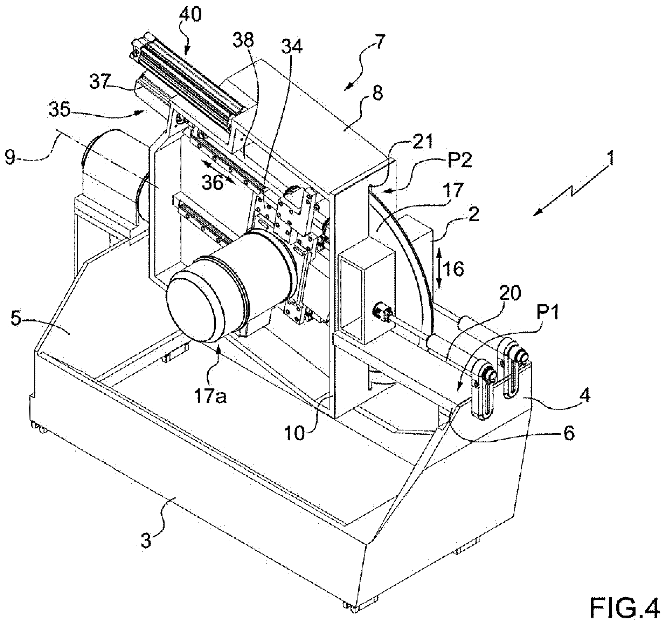

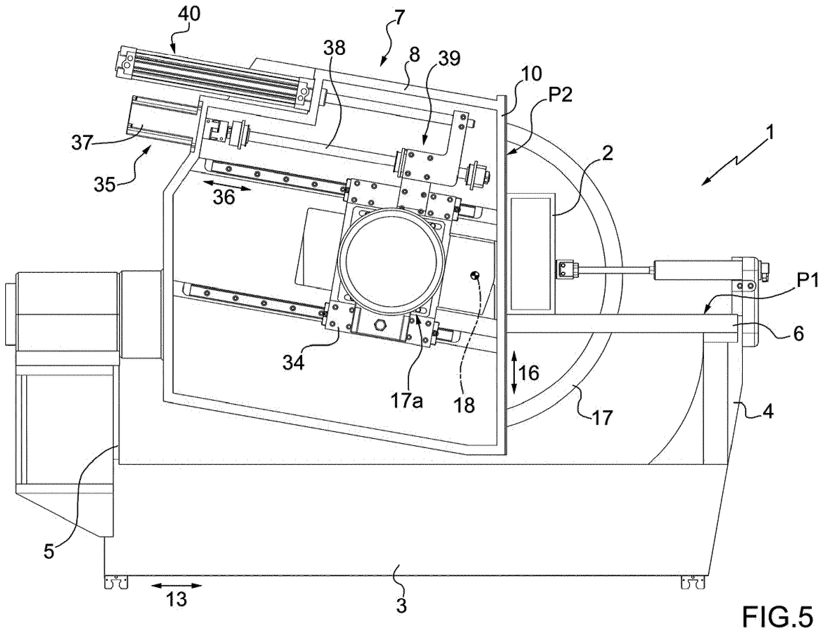

The variant shown in Figures 4 and 5 differs from the one shown in the previous figures solely in that the slides 11 and 14 therein are eliminated and replaced by a single slide 34, slidingly coupled to the frame 8 to perform, relative to the frame 8 and under the thrust of an operating device 35 similar to the operating device 12, rectilinear movements in a direction 36 oriented at an angle other than 90° relative to the plane P2 and inclined towards the plane P1.

The operating device 35 comprises an electric motor 37, which is fixed to the frame 8 and is provided with an output shaft 38, which extends in the direction 36 and is coupled to the slide 34 by means of a screw-nut coupling 39.

In the event of a power supply failure of the electric motor 37, the blade 17 is moved from its working position to its rest position by an operating device 40 that is completely analogous to the operating device 25.

According to a variant not shown, the blade 17 is mounted on a crank hinged to the frame 8 to rotate about a fulcrum axis parallel to the axis 18 and to move the blade 17 between its operating and its rest position.

## Claims

1. A cutting-off machine to cut section bars (2), in particular made of aluminium, light alloys, PVC or the like, the cutting-off machine comprising a base (3) defining a horizontal resting surface (P1) for a section bar (2); and a cutting unit (7) comprising, in turn, a support frame (8), a vertical resting surface (P2) for the section bar (2) that is obtained on the support frame (8), a circular cutting blade (17), which is mounted on the support frame (8) to rotate about a first rotation axis (18), and a first operating device (12) to move the cutting blade (17) between a working position, in which the cutting blade (17) protrudes above the horizontal resting surface (P1) to cut the section bar (2), and a rest position, in which the cutting blade (17) is arranged outside the horizontal resting surface (PI), wherein the first operating device (12) comprises at least one electric motor (22) to control the movement of the cutting blade (17) between the working position and the rest position; and being **characterized in that** it further comprises a second operating device (25) to control the movement of the cutting blade (17) from its working position to its rest position in the event of a power supply failure of the electric motor (22) of the first operating device (12).

2. A cutting-off machine according to claim 1, wherein the cutting blade (17) and an output shaft (23) of the electric motor (22) are connected to one another by interposing a screw-nut coupling (24); the output shaft (23) having a thread with a pitch that allows the nut to move along the output shaft (23) under the thrust of the second operating device (25).

3. A cutting-off machine according to claim 1, wherein the cutting blade (17) and an output shaft (23) of the electric motor (22) are connected to one another by interposing a pinion-rack coupling.

4. A cutting-off machine according to claim 1, wherein the cutting blade (17) and an output shaft (23) of the electric motor (22) are connected to one another by interposing a belt transmission.

5. A cutting-off machine according to any one of the preceding claims, wherein the second operating device (25) comprises an actuating cylinder (26), which is interposed between the support frame (8) and the cutting blade (17).

6. A cutting-off machine according to claim 5, wherein the second operating device (25) further comprises a feeding unit (31) to feed a pressurized fluid to the actuating cylinder (26) and a valve (32), which is interposed between the feeding unit (31) and the actuating cylinder (26) and is movable between a first working position, in which the feeding unit (31) and the actuating cylinder (26) are separated from one another, and a second working position, in which the feeding unit (31) and the actuating cylinder (26) are connected to one another.

7. A cutting-off machine according to claim 6, wherein the actuating cylinder (26) comprises a piston (27) defining a first variable-volume chamber (28), which is connected to a first discharge line (30), and a second variable-volume chamber (29), which is connected to a second discharge line (33) when the valve (32) is arranged in its first working position, and to the feeding unit (31) when the valve (32) is arranged in its second working position.

8. A cutting-off machine according to any one of the claims from 1 to 4, wherein the second operating device (25) comprises at least one mechanical or gas spring, which is interposed between the support frame (8) and the cutting blade (17).

9. A cutting-off machine according to any one of the preceding claims, wherein the cutting blade (17) is slidingly coupled to the support frame (8) so as to move between said working position and said rest position.

10. A cutting-off machine according to any one of the claims from 1 to 8 and further comprising a crank mechanism, which is interposed between the support frame (8) and the cutting blade (17) so as to move the cutting blade (17) between said working position and said rest position.

11. A cutting-off machine according to any one of the preceding claims, wherein the support frame (8) is mounted so as to rotate about a second rotation axis (9), which is substantially perpendicular to the vertical resting surface (P2).

12. A cutting-off machine according to any one of the preceding claims and further comprising a third operating device (17a) to move the cutting blade (17) about the first rotation axis (18) .

13. A cutting-off machine according to any one of the preceding claims, wherein the cutting blade (17) is movable between said working position and said rest position with at least one motion component that is parallel to a feeding direction (13), which is perpendicular to the vertical resting surface (P2).

14. A cutting-off machine according to any one of the claims from 1 to 12, wherein the cutting blade (17) is movable between said working position and said rest position in a feeding direction (36), which is oriented at an angle other than 90° relative to the vertical resting surface (P2) and is inclined towards the horizontal resting surface (P1).

## Patentansprüche

1. Schneide- bzw. Trennmaschine zum Schneiden bzw. Trennen von Profilstangen (2), insbesondere aus Aluminium, Leichtmetalllegierungen, PVC oder dergleichen, wobei die Schneidemaschine eine Basis (3), die eine horizontale Auflagefläche bzw. -oberfläche (P1) für eine Profilstange (2) definiert; und eine Schneideinheit (7) umfasst, die wiederum umfasst: einen Stütz- bzw. Trägerrahmen (8), eine vertikale Auflagefläche bzw. -oberfläche (P2) für die auf dem Trägerrahmen (8) erhaltene Profilstange (2), ein kreisförmiges Schneidemesser (17), das an dem Trägerrahmen (8) dahingehend montiert ist, um eine erste Drehachse (18) drehbar zu sein, und eine erste Bedienvorrichtung (12) zum Bewegen des Schneidemessers (17) zwischen einer Arbeitsposition, in der das Schneidemesser (17) über die horizontale Auflagefläche (P1) ragt, um die Profilstange (2) zu schneiden, und einer Ruheposition, in der das Schneidemesser (17) außerhalb der horizontalen Auflagefläche (P1) angeordnet ist, wobei die erste Bedienvorrichtung (12) zumindest einen Elektromotor (22) umfasst, um die Bewegung des Schneidemessers (17) zwischen der Arbeitsposition und der Ruheposition zu steuern bzw. zu regeln; und **dadurch gekennzeichnet, dass** sie ferner eine zweite Bedienvorrichtung (25) umfasst, um die Bewegung des Schneidemessers (17) aus seiner Arbeitsposition in seine Ruheposition in dem Fall eines Leistungsversorgungsausfalls des Elektromotors (22) der ersten Bedienvorrichtung (12) zu steuern bzw. zu regeln.

2. Schneidemaschine nach Anspruch 1, wobei das Schneidemesser (17) und eine Abtriebswelle (23) des Elektromotors (22) durch Zwischenanordnung einer Schrauben-Mutter-Kupplung (24) miteinander verbunden sind; wobei die Abtriebswelle (23) ein Gewinde mit einer Steigung aufweist, das es der Mutter erlaubt, sich entlang der Abtriebswelle (23) unter dem Schub bzw. Druck der zweiten Bedienvorrichtung (25) zu bewegen.

3. Schneidemaschine nach Anspruch 1 oder 2, wobei das Schneidemesser (17) und eine Abtriebswelle (23) des Elektromotors (22) durch Zwischenanordnung einer Ritzel-Zahnstangen-Kupplung miteinander verbunden sind.

4. Schneidemaschine nach Anspruch 1, wobei das Schneidemesser (17) und eine Abtriebswelle (23) des Elektromotors (22) durch Zwischenanordnung einer Riemenübertragung miteinander verbunden sind.

5. Schneidemaschine nach einem der vorhergehenden Ansprüche, wobei die zweite Bedienvorrichtung (25) einen Betätigungszylinder (26) umfasst, der zwischen dem Trägerrahmen (8) und dem Schneidemesser (17) angeordnet ist.

6. Schneidemaschine nach Anspruch 5, wobei die zweite Bedienvorrichtung (25) ferner eine Zuführeinheit (31) zum Zuführen eines druckbeaufschlagten Fluids zu dem Betätigungszylinder (26) und ein Ventil (32) umfasst, das zwischen der Zuführeinheit (31) und dem Betätigungszylinder (26) angeordnet ist und zwischen einer ersten Arbeitsposition, in der die Zuführeinheit (31) und der Betätigungszylinder (26) voneinander getrennt sind, und einer zweiten Arbeitsposition bewegbar ist, in der die Zuführeinheit (31) und der Betätigungszylinder (26) miteinander verbunden sind.

7. Schneidemaschine nach Anspruch 6, wobei der Betätigungszylinder (26) einen Kolben (27) umfasst, der eine erste Kammer (28) variablen Volumens, die mit einer ersten Auslassleitung (30) verbunden ist, und eine zweite Kammer (29) variablen Volumens definiert, die mit einer zweiten Auslassleitung (33), wenn das Ventil (32) in seiner ersten Arbeitsposition angeordnet ist, und mit der Zuführeinheit (31) verbunden ist, wenn das Ventil (32) in seiner zweiten Arbeitsposition angeordnet ist.

8. Schneidemaschine nach einem der Ansprüche 1 bis 4, wobei die zweite Bedienvorrichtung (25) zumindest eine mechanische Feder oder Gasfeder umfasst, die zwischen dem Trägerrahmen (8) und dem Schneidemesser (17) angeordnet ist.

9. Schneidemaschine nach einem der vorhergehenden Ansprüche, wobei das Schneidemesser (17) gleitend bzw. verschiebbar mit dem Trägerrahmen (8) gekoppelt ist, um sich zwischen der Arbeitsposition und der Ruheposition zu bewegen.

10. Schneidemaschine nach einem der Ansprüche 1 bis 8 und ferner umfassend einen Kurbelmechanismus, der zwischen dem Trägerrahmen (8) und dem Schneidemesser (17) angeordnet ist, um das Schneidemesser (17) zwischen der Arbeitsposition und der Ruheposition zu bewegen.

11. Schneidemaschine nach einem der vorhergehenden Ansprüche, wobei der Trägerrahmen (8) dahingehend montiert ist, um eine zweite Drehachse (9) drehbar zu sein, die im Wesentlichen senkrecht zu der vertikalen Auflagefläche (P2) ist.

12. Schneidemaschine nach einem der vorhergehenden Ansprüche und ferner umfassend eine dritte Bedienvorrichtung (17a) zum Bewegen des Schneidemessers (17) um die erste Drehachse (18).

13. Schneidemaschine nach einem der vorhergehenden Ansprüche, wobei das Schneidemesser (17) zwischen der Arbeitsposition und der Ruheposition mit zumindest einer zu der Zuführrichtung (13) parallelen Bewegungskomponente bewegbar ist, die senkrecht zu der vertikalen Auflagefläche (P2) ist.

14. Schneidemaschine nach einem der Ansprüche 1 bis 12, wobei das Schneidemesser (17) zwischen der Arbeitsposition und der Ruheposition in einer Zuführrichtung (36) bewegbar ist, die in einem Winkel von 90° unterschiedlichen Winkel relativ zu der vertikalen Auflagefläche (P2) ausgerichtet ist und zu der horizontalen Auflagefläche (P1) hin geneigt ist.

## Revendications

1. Machine de découpe pour découper des barres de section (2), en particulier fabriquées à partir d'aluminium, d'alliages légers, de PVC ou similaires, la machine de découpe comprenant une base (3) définissant une surface d'appui horizontale (P1) pour une barre de section (2) ; et une unité de coupe (7) comprenant, à son tour, un bâti de support (8), une surface de repos verticale (P2) pour la barre de section (2) qui est obtenue sur le bâti de support (8), une lame de coupe circulaire (17) qui est montée sur le bâti de support (8) afin de tourner autour d'un premier axe de rotation (18), et un premier dispositif d'actionnement (12) pour déplacer la lame de coupe (17) entre une position de travail dans laquelle la lame de coupe (17) fait saillie au-dessus de la surface d'appui horizontale (P1) pour couper la barre de section (2) et une position de repos dans laquelle la lame de coupe (17) est agencée à l'extérieur de la surface d'appui horizontale (P1), dans laquelle le premier dispositif d'actionnement (12) comprend au moins un moteur électrique (22) pour commander le mouvement de la lame de coupe (17) entre la position de travail et la position de repos ; et étant **caractérisée en ce qu'**elle comprend en outre un deuxième dispositif d'actionnement (25) pour commander le mouvement de la lame de coupe (17) de sa position de travail à sa position de repos dans le cas d'une panne de courant du moteur électrique (22) du premier dispositif d'actionnement (12).

2. Machine de découpe selon la revendication 1, dans laquelle la lame de découpe (17) et un arbre de sortie (23) du moteur électrique (22) sont raccordés entre eux en intercalant un système vis-écrou (24) ; l'arbre de sortie (23) ayant un filetage avec un pas qui permet à l'écrou de se déplacer le long de l'arbre de sortie (23) sous la poussée du deuxième dispositif d'actionnement (25).

3. Machine de découpe selon la revendication 1, dans laquelle la lame de coupe (17) et un arbre de sortie (23) du moteur électrique (22) sont raccordés entre eux en intercalant un système pignon-crémaillère.

4. Machine de découpe selon la revendication 1, dans laquelle la lame de coupe (17) et un arbre de sortie (23) du moteur électrique (22) sont raccordés entre eux en intercalant une transmission à courroie.

5. Machine de découpe selon l'une quelconque des revendications précédentes, dans laquelle le deuxième dispositif d'actionnement (25) comprend un cylindre d'actionnement (26) qui est intercalé entre le bâti de support (8) et la lame de coupe (17).

6. Machine de découpe selon la revendication 5, dans laquelle le deuxième dispositif d'actionnement (25) comprend en outre une unité d'alimentation (31) pour alimenter en fluide sous pression le cylindre d'actionnement (26) et une valve (32) qui est intercalée entre l'unité d'alimentation (31) et le cylindre d'actionnement (26) et est mobile entre une première position de travail dans laquelle l'unité d'alimentation (31) et le cylindre d'actionnement (26) sont séparés l'un de l'autre, et une seconde position de travail dans laquelle l'unité d'alimentation (31) et le cylindre d'actionnement (26) sont raccordés entre eux.

7. Machine de découpe selon la revendication 6, dans laquelle le cylindre d'actionnement (26) comprend un piston (27) définissant une première chambre à volume variable (28) qui est raccordée à une première ligne de décharge (30), et une seconde chambre à volume variable (29) qui est raccordée à une seconde ligne de décharge (33) lorsque la valve (32) est agencée dans sa première position de travail, et à l'unité d'alimentation (31) lorsque la valve (32) est agencée dans sa seconde position de travail.

8. Machine de découpe selon l'une quelconque des revendications 1 à 4, dans laquelle le deuxième dispositif d'actionnement (25) comprend au moins un ressort mécanique ou à gaz qui est intercalé entre le bâti de support (8) et la lame de coupe (17).

9. Machine de découpe selon l'une quelconque des revendications précédentes, dans laquelle la lame de coupe (17) est couplée, de manière coulissante, au bâti de support (8) afin de se déplacer entre ladite position de travail et ladite position de repos.

10. Machine de découpe selon l'une quelconque des revendications 1 à 8, et comprenant en outre un mécanisme de manivelle qui est intercalé entre le bâti de support (8) et la lame de coupe (17) afin de déplacer la lame de coupe (17) entre ladite position de travail et ladite position de repos.

11. Machine de découpe selon l'une quelconque des revendications précédentes, dans laquelle le bâti de support (8) est monté afin de tourner autour d'un second axe de rotation (9) qui est sensiblement perpendiculaire à la surface de repos verticale (P2).

12. Machine de découpe selon l'une quelconque des revendications précédentes et comprenant en outre un troisième dispositif d'actionnement (17a) pour déplacer la lame de coupe (17) autour du premier axe de rotation (18) .

13. Machine de découpe selon l'une quelconque des revendications précédentes, dans laquelle la lame de coupe (17) est mobile entre ladite position de travail et ladite position de repos avec au moins une composante de mouvement qui est parallèle à une direction d'alimentation (13) qui est perpendiculaire à la surface de repos verticale (P2).

14. Machine de découpe selon l'une quelconque des revendications 1 à 12, dans laquelle la lame de coupe (17) est mobile entre ladite position de travail et ladite position de repos dans une direction d'alimentation (36) qui est orientée selon un angle différent de 90° par rapport à la surface de repos verticale (P2) et est inclinée vers la surface d'appui horizontale (P1).
